# EUROPEAN PATENT APPLICATION

(11) **EP 4 792 933 A1**
(43) Date of publication of application: **19.08.2026**
(21) Application number: 24876980.4
(22) Date of filing: 11.09.2024
(51) Int. Cl.: B01J 23/63, B01J 23/58, B01J 35/57, C01B 3/04

(54) **AMMONIA DECOMPOSITION CATALYST DEVICE, HYDROGEN PRODUCTION METHOD, AND AMMONIA COMBUSTION METHOD**

(30) Priority: 13.10.2023 JP 2023177463
(71) Applicant: CATALER CORPORATION, Kakegawa-shi, Shizuoka 437-1492 (JP)
(72) Inventor: HIRANO, Shusuke, Kakegawa-shi, Shizuoka 437-1492 (JP); IDE, Hajime, Kakegawa-shi, Shizuoka 437-1492 (JP); CHIBA, Akiya, Kakegawa-shi, Shizuoka 437-1492 (JP)
(74) Representative: Ricker, Mathias
(86) International application number: PCT/JP2024/032515
(87) International publication number: WO 2025/079381

(57) **Abstract**

A purpose of the present invention is to provide an ammonia decomposition catalyst device with which a conversion of ammonia (NH₃) can be improved. An ammonia decomposition catalyst device 100 for producing hydrogen (H₂) through decomposition of ammonia (NH₃) has a gas-flow upstream-side region 100a and a gas-flow downstream-side region 100b, in which a base density of the gas-flow downstream-side region 100b is a higher than that of the gas-flow upstream-side region 100a.

## Description

### FIELD

The present invention relates to an ammonia-decomposing catalyst device, to a hydrogen production method and to an ammonia combustion method.

### BACKGROUND

Ammonia-decomposing catalysts are utilized in ammonia burners, for example.

Since ammonia burners using ammonia as fuel have poor ignitability for ammonia, it is necessary to add combustion aids in order to promote combustion of ammonia. Combustion aids that may be used include hydrogen and hydrocarbon-based fuels. Producing hydrogen as a combustion aid from ammonia using an ammonia-decomposing catalyst makes it possible to achieve stable combustion with an ammonia burner using ammonia alone. The following systems employing ammonia-decomposing catalysts are known.

PTL 1, for example, discloses a hydrogen production system comprising an ammonia decomposition zone in which ammonia is decomposed in the presence of an ammonia-decomposing catalyst to produce hydrogen, and an ammonia oxidation zone in which ammonia is oxidized in the presence of an ammonia oxidation catalyst, provided upstream from the ammonia decomposition zone, wherein the ammonia oxidation catalyst is a catalyst comprising a catalytically active metal supported on a support composed of a redox-active metal oxide. With the hydrogen production system of PTL 1, heat produced by the ammonia oxidation reaction at the upstream end is supplied to the ammonia decomposition zone at the downstream end, thus eliminating the need for preheating with an electric heater or other heater during the ammonia decomposition step, and allowing production cost for hydrogen to be reduced.

PTL 2 discloses a hydrogen generating apparatus that generates hydrogen from ammonia, the apparatus comprising an ammonia oxidizing unit having an ammonia oxidation catalyst that oxidizes ammonia, and an ammonia decomposing unit having an ammonia-decomposing catalyst that decomposes ammonia to produce nitrogen and hydrogen; wherein the ammonia decomposing unit is disposed at the supply gas flow downstream end of the ammonia oxidizing unit; and either or both of the following conditions (i) and (ii) are satisfied: (i) the ammonia oxidation catalyst comprises both a noble metal catalyst and a base metal catalyst, and the loading concentration of the noble metal catalyst at the supply gas flow upstream end part of the ammonia oxidizing unit is higher than the loading concentration of the noble metal catalyst at the supply gas flow downstream end part of the ammonia oxidizing unit, (ii) the ammonia-decomposing catalyst comprises both a noble metal catalyst and a base metal catalyst, and the loading concentration of the noble metal catalyst at the supply gas flow downstream end part of the ammonia decomposing unit is higher than the loading concentration of the noble metal catalyst at the supply gas flow upstream end part of the ammonia decomposing unit. It is stated that the hydrogen generating apparatus of PTL 2 can efficiently generate hydrogen from ammonia.

PTL 3 discloses a hydrogen production catalyst which is a catalyst for obtaining hydrogen from gas containing ammonia and oxygen, the catalyst comprising an ammonia combustion catalyst component and an ammonia-decomposing catalyst component. With the hydrogen production catalyst of PTL 3, it is possible to provide an inexpensive, practical catalyst that can promote self-supporting reaction and efficiently produce hydrogen from ammonia, by utilizing the heat of combustion obtained by partial combustion of ammonia for ammonia decomposition, without excessive heating from outside the reactor, and to provide a technique for efficiently producing hydrogen from ammonia using the catalyst.

PTL 4 discloses a ruthenium-based catalyst for production of hydrogen by ammonia decomposition, the ruthenium-based catalyst comprising an active component, an accelerator and a support, wherein the active component is ruthenium, the accelerator is cesium and/or potassium, and the support comprises a composite support of a metal oxide and active carbon. PTL 5 discloses a gas turbine combustor, wherein ruthenium or nickel can be used as an ammonia-decomposing catalyst.

### [CITATION LIST]

### [PATENT LITERATURE]

[PTL 1] Japanese Unexamined Patent Publication No. 2010-269965
[PTL 2] Japanese Unexamined Patent Publication No. 2010-241647
[PTL 3] Japanese Unexamined Patent Publication No. 2010-240646
[PTL 4] Japanese Unexamined Patent Publication No. 2020-082079
[PTL 5] Japanese Unexamined Patent Publication No. 2021-127861

### SUMMARY

### [TECHNICAL PROBLEM]

Since the reaction in which ammonia is decomposed to produce hydrogen is an endothermic reaction, the temperature in the ammonia-decomposing catalyst decreases at the downstream end as the reaction proceeds even with a high temperature at the upstream end of the ammonia decomposition zone, and this often results in an insufficient ammonia conversion rate. The hydrogen concentration also increases as the ammonia decomposition reaction proceeds, often resulting in an insufficient ammonia conversion rate.

It is therefore an object of the present invention to provide an ammonia-decomposing catalyst device that can increase the ammonia conversion rate.

### [SOLUTION TO PROBLEM]

The invention achieves the object described above by the following means.

### <Aspect 1>

An ammonia-decomposing catalyst device that decomposes ammonia to produce hydrogen, wherein
the ammonia-decomposing catalyst device has a gas flow upstream region and a gas flow downstream region, and
the base density in the gas flow downstream region is greater than the base density in the gas flow upstream region.

### <Aspect 2>

The ammonia-decomposing catalyst device according to aspect 1, wherein:
the gas flow upstream region has a first basic support, the gas flow downstream region has a second basic support, and
ruthenium or nickel is supported on the first and/or second basic support.

### <Aspect 3>

The ammonia-decomposing catalyst device according to aspect 1 or 2, wherein the basic support is a ceria support, a ceria-zirconia complex oxide support, a magnesia-alumina complex oxide support and/or a magnesium oxide support.

### <Aspect 4>

A hydrogen production method, wherein ammonia is contacted with an ammonia-decomposing catalyst device according to any one of aspects 1 to 3, and the ammonia is decomposed to produce hydrogen.

### <Aspect 5>

An ammonia combustion method wherein ammonia is combusted together with hydrogen produced by the process according to aspect 4.

### [ADVANTAGEOUS EFFECTS OF INVENTION]

The ammonia-decomposing catalyst device of the invention can increase the ammonia conversion rate.

### BRIEF DESCRIPTION OF DRAWINGS

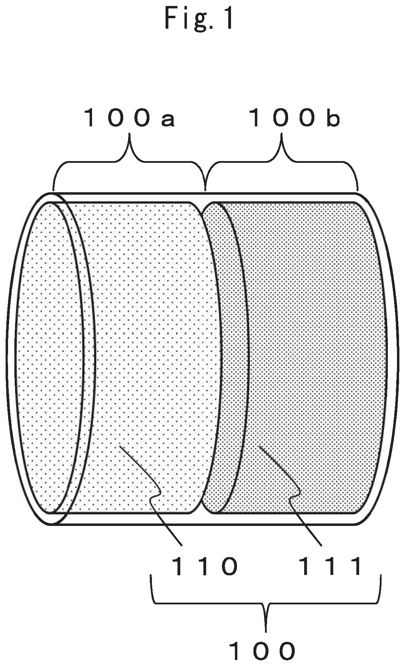

Fig. 1 is a schematic diagram illustrating an ammonia-decomposing catalyst device of the invention.

### DESCRIPTION OF EMBODIMENTS

Embodiments of the invention will now be described in detail. The present invention is not limited to the embodiments described below, and various modifications may be implemented within the scope of the gist thereof. Similar elements in the drawings are indicated by like reference numerals and will be explained only once.

### <Ammonia-decomposing catalyst device>

An ammonia-decomposing catalyst device of the invention is an ammonia-decomposing catalyst device that decomposes ammonia to produce hydrogen, wherein:
the ammonia-decomposing catalyst device has a gas flow upstream region and a gas flow downstream region, and
the base density in the gas flow downstream region is greater than the base density in the gas flow upstream region.

The ammonia-decomposing catalyst device of the invention can increase the ammonia conversion rate.

Without being limited to any particular theory, it is believed that with the ammonia-decomposing catalyst device of the invention, since the base density is relatively lower in the gas flow upstream region which has a relatively high concentration of ammonia reactant, thus inhibiting excessively rapid progression of the ammonia decomposition reaction, and relatively increasing the base density in the gas flow downstream region which has a relatively low concentration of ammonia reactant, that progression of the ammonia decomposition reaction is thereby aided. With this type of ammonia-decomposing catalyst device of the invention, it is believed that the ammonia decomposition reaction, which is an endothermic reaction, can suitably take place throughout the entire ammonia-decomposing catalyst device.

Since the hydrogen concentration of the decomposition product increases as the ammonia decomposition reaction proceeds, the hydrogen concentration in the gas flow downstream region is higher than in the gas flow upstream region. The ammonia-decomposing catalyst device of the invention has an ammonia-decomposing catalyst with a relatively high base density, or in other words, an ammonia-decomposing catalyst that efficiently promotes ammonia decomposition reaction even in the copresence of hydrogen, disposed in the gas flow downstream region, thus allowing the ammonia decomposition reaction to proceed adequately throughout the entire ammonia-decomposing catalyst device even as the hydrogen concentration increases.

### <Decomposition of ammonia with ammonia-decomposing catalyst device>

The ammonia-decomposing catalyst device of the invention decomposes ammonia to produce hydrogen.

Without being restrictive, the ammonia-decomposing catalyst device may be used by circulating an ammonia-containing gas through the ammonia-decomposing catalyst device. The ammonia-decomposing catalyst device may be a fixed bed circulation system, but this is not limitative. The decomposition product of ammonia obtained by the ammonia-decomposing catalyst device may comprise hydrogen, and may also include by-products other than hydrogen, such as nitrogen and water.

### (Ammonia-containing gas)

The ammonia-containing gas is not particularly restricted, and it may include other gases in addition to ammonia. Examples of gases other than ammonia include inert gases and oxidizing gases. Examples of inert gases include, but are not limited to, nitrogen and argon. The oxidizing gas may be oxygen or air, with no limitation to these.

### (Decomposition of ammonia)

The ammonia decomposition reaction proceeds according to the formula: NH₃ → 0.5N₂ + 1.5H₂ - 46 cal/mol (formula 1). The reaction is a highly endothermic reaction, and the temperature in the system therefore falls as the reaction proceeds. With the ammonia-decomposing catalyst device of the invention, the ammonia decomposition reaction (an endothermic reaction) can take place satisfactorily throughout the entire ammonia-decomposing catalyst device. Without being restrictive, in the ammonia decomposition reaction, a portion of the ammonia may be oxidized as necessary by oxygen in the air (NH₃ + 0.75O₂ - 0.5N₂ + 1.5H₂O + 91 cal/mol (formula 2)), generating heat of oxidation which is used to decompose the rest of the ammonia into hydrogen and nitrogen (formula 1).

### <Construction of ammonia-decomposing catalyst device>

The ammonia-decomposing catalyst device of the invention has a gas flow upstream region and a gas flow downstream region, and
the base density in the gas flow downstream region is greater than the base density in the gas flow upstream region.

### <Ammonia-decomposing catalyst device>

The ammonia-decomposing catalyst device comprises a combination of an ammonia decomposing catalyst-supporting substrate, i.e. a substrate, and an ammonia-decomposing catalyst supported on the substrate.

Without being restrictive, the ammonia-decomposing catalyst device may be used by circulating an ammonia-containing gas through the ammonia-decomposing catalyst device. With respect to gas flow, the ammonia-decomposing catalyst device has a gas flow upstream region and a gas flow downstream region.

Without being restrictive, the ammonia-decomposing catalyst device may have ammonia decomposing catalyst-supporting substrates disposed in both the gas flow upstream region and in the gas flow downstream region. For example, the ammonia-decomposing catalyst device may have a first ammonia decomposing catalyst-supporting substrate disposed in the gas flow upstream region and a second ammonia decomposing catalyst-supporting substrate disposed in the gas flow downstream region.

### <Ammonia decomposing catalyst-supporting substrate>

The ammonia decomposing catalyst-supporting substrate comprises a substrate and an ammonia-decomposing catalyst layer on the substrate.

### (Substrate)

The shape of the substrate may be, for example, a honeycomb shape having a plurality of gas passages divided by partition walls, but this is not limitative. The material of the substrate may be a ceramic support or a metal support. Examples of ceramic supports include, but are not limited to, cordierite (2 MgO-2Al₂O₃-5SiO₂), silicon carbide (SiC), alumina (Al₂O₃), mullite (3Al₂O₃-2SiO₂) and aluminum titanate (Al₂TiO₅). Examples of metal supports include, but are not limited to, stainless steel (SUS), Fe-Cr-Al-based alloys and Ni-Cr-Al-based alloys.

### (Ammonia-decomposing catalyst layer)

The ammonia-decomposing catalyst layer comprises an ammonia-decomposing catalyst, and if necessary it may also comprise a binder.

### (Binder)

The binder used is not particularly restricted, and it may be an inorganic binder. Examples of inorganic binders include, but are not limited to, alumina (Al₂O₃), titania (TiO₂) and zirconia (ZrO₂).

The ammonia-decomposing catalyst layer may be formed by a method employed in the prior art, such as an impregnation method or wash coat method. Formation of the ammonia-decomposing catalyst layer may include, specifically, preparing a slurry containing an ammonia-decomposing catalyst, coating the solution or slurry onto the substrate, and optionally firing it.

The coating amount onto the substrate is not particularly restricted, and may be 100 g/L or greater, 120 g/L or greater, 140 g/L or greater, 160 g/L or greater or 180 g/L or greater, and 300 g/L or lower, 280 g/L or lower, 260 g/L or lower, 240 g/L or lower or 220 g/L or lower, with respect to the volume of the substrate.

### <Ammonia-decomposing catalyst>

The ammonia-decomposing catalyst comprises a support and an ammonia-decomposing catalyst metal supported on the support.

### (Support)

Examples of supports that may be used include ceria supports, ceria-zirconia complex oxide supports, magnesia-alumina complex oxide supports, alumina supports, zirconia supports, silica supports, titania supports and magnesium oxide supports. The support is not particularly restricted but is preferably a basic support. Examples of basic supports that may be used include ceria supports, ceria-zirconia complex oxide supports, magnesia-alumina complex oxide supports and magnesium oxide supports.

The particle diameter of the support particles (secondary particles) may be 2 µm or larger, 3 µm or larger or 4 µm or larger, and 80 µm or smaller, 50 µm or smaller, 30 µm or smaller, 20 µm or smaller or 10 µm or smaller. The particle diameter of the support particles may be the median diameter determined by the dynamic light scattering method, for a suspension comprising the support particles dispersed in an appropriate liquid medium (such as water).

### (Ammonia-decomposing catalyst metal)

The ammonia-decomposing catalyst metal is not particularly restricted, and any one that promotes ammonia decomposition reaction may be used. Examples of ammonia-decomposing catalyst metals to be used include noble metals and base metals. Examples of noble metals include platinum, ruthenium, palladium and rhodium, with ruthenium being preferred. Base metals include iron, cobalt, nickel, tungsten, molybdenum and vanadium, among which nickel is preferred.

The particle size (primary particle size) of the ammonia-decomposing catalyst metal may be 1 nm or larger, 5 nm or larger, 10 nm or larger, 15 nm or larger, 20 nm or larger or 30 nm or larger, and 100 nm or smaller, 80 nm or smaller or 60 nm or smaller, for example. The particle size of the ammonia-decomposing catalyst metal can be determined from the number-mean particle size in an image photographed with a transmission electron microscope.

The amount of ammonia-decomposing catalyst metals in the ammonia-decomposing catalyst layer may be 0.01 g/L or greater, 0.02 g/L or greater, 0.03 g/L or greater, 0.04 g/L or greater or 0.05 g/L or greater, and 6.00 g/L or lower, 4.00 g/L or lower, 3.00 g/L or lower, 2.00 g/L or lower, 0.30 g/L or lower or 0.10 g/L or lower, as the metal-equivalent mass per 1 L of substrate capacity.

In the ammonia-decomposing catalyst device of the invention,
the gas flow upstream region has a first basic support, the gas flow downstream region has a second basic support, and ruthenium or nickel may be supported on the first and/or second basic support.

There are no particular restrictions on the first and second basic supports, for which ceria supports, ceria-zirconia complex oxide supports, magnesia-alumina complex oxide supports or magnesium oxide supports may be used.

Loading of the ammonia-decomposing catalyst metal on the support may be accomplished, specifically, by contacting the support and the precursor for the ammonia-decomposing catalyst metal in an appropriate liquid medium, preferably water, and then drying and firing the recovered solid content. The precursor for the ammonia-decomposing catalyst metal may be any nitrate, sulfate, hydrochloride or acetate of the ammonia-decomposing catalyst metal.

The loading amount of the ammonia-decomposing catalyst metal on the support may be 0.1 mass% or greater, 0.2 mass% or greater, 0.4 mass% or greater or 0.6 mass% or greater, and 2.0 mass% or lower, 1.5 mass% or lower, 1.2 mass% or lower, 1.0 mass% or lower or 0.8 mass% or lower, for example, as the ratio of the mass of the ammonia-decomposing catalyst metal with respect to the mass of the support.

### (Specific surface area of ammonia-decomposing catalyst)

The specific surface area of the ammonia-decomposing catalyst may be 30 m²/g or greater, 40 m²/g or greater, 50 m²/g or greater, 60 m²/g or greater or 70 m²/g or greater, and 300 m²/g or lower, 250 m²/g or lower, 200 m²/g or lower or 150 m²/g or lower, for example. The specific surface area of the ammonia-decomposing catalyst can be determined by the BET method using nitrogen as the adsorbate.

### <Base density of ammonia-decomposing catalyst device>

The base density can be determined by the CO₂ adsorption of the ammonia-decomposing catalyst in the ammonia-decomposing catalyst device. The CO₂ adsorption can be measured, specifically, by CO₂ temperature-programmed desorption (CO₂-TPD), using a BELMETAL3 metal dispersion meter (MicrotracBEL)/BELMASS Online gas analyzer (MicrotracBEL). A 0.2 g portion of the ammonia-decomposing catalyst is weighed out and introduced into the apparatus, and then the measuring sample is heated to 500°C in a helium atmosphere for adsorbate desorption treatment, adsorbing CO₂ at 120°C. Next, the measuring sample is increased in temperature to 120 to 700°C at 30°C/min in a helium atmosphere, and the amount of CO₂ desorbed during temperature increase is detected. A large CO₂ degree of adsorption is judged as high base density, while a low degree of CO₂ adsorption is judged as low base density.

Fig. 1 is a schematic diagram showing one mode of the ammonia-decomposing catalyst device of the invention, but this is not limitative.

With respect to gas flow, the ammonia-decomposing catalyst device 100 has a gas flow upstream region 100a and a gas flow downstream region 100b. A first ammonia decomposing catalyst-supporting substrate 110 is disposed in the gas flow upstream region 100a, and a second ammonia decomposing catalyst-supporting substrate 111 is disposed in the gas flow downstream region 100b. An ammonia-decomposing catalyst comprising a first basic support is supported on the substrate in the first ammonia decomposing catalyst-supporting substrate 110. An ammonia-decomposing catalyst comprising a second basic support is supported on the substrate in the second ammonia decomposing catalyst-supporting substrate 111. The base density in the gas flow downstream region 100b is higher than the base density in the gas flow upstream region 100a. Specifically, in Fig. 1, the ammonia-decomposing catalyst supported on the second ammonia decomposing catalyst-supporting substrate 111 has a higher base density than the ammonia-decomposing catalyst supported on the first ammonia decomposing catalyst-supporting substrate 110.

### <Hydrogen production method>

The hydrogen production method of the invention comprises contacting ammonia with an ammonia-decomposing catalyst device of the invention and decomposing the ammonia to produce hydrogen.

Using the hydrogen production method of the invention, it is possible to produce hydrogen from ammonia at a high conversion rate.

The method of contacting the ammonia with the ammonia-decomposing catalyst device is not particularly restricted, and the ammonia-containing gas may be circulated through the ammonia-decomposing catalyst device. The ammonia-decomposing catalyst device may be, but is not limited to, a fixed-bed flow system.

The temperature for contacting ammonia with the ammonia-decomposing catalyst device is not particularly restricted, but from the viewpoint of the ammonia decomposition rate and cost it may be 300°C or higher, 350°C or higher, 400°C or higher or 450°C or higher, and 900°C or lower, 800°C or lower, 700°C or lower or 600°C or lower.

The ammonia-containing gas is as described above under "<Decomposition of ammonia with ammonia-decomposing catalyst device>".

The hydrogen production method may be employed for any desired purpose, and for example, it may be used in an ammonia burner, fuel cell or internal combustion engine, with no limitation to these.

### <Ammonia combustion method>

The ammonia combustion method of the invention comprises combustion of ammonia together with hydrogen produced by the procedure of the invention.

Because ammonia burners using ammonia as fuel have poor ignitability for ammonia, it is necessary to add combustion aids that promote combustion of ammonia. Combustion aids that may be used include hydrogen and hydrocarbon-based fuels. By producing hydrogen as a combustion aid from ammonia using an ammonia-decomposing catalyst, it is possible to achieve stable combustion with an ammonia burner using ammonia alone.

### EXAMPLES

The invention will now be explained in further detail by Examples, with the understanding that the scope of the invention is not limited to these Examples.

### <Example 1>

### <Fabrication of ammonia-decomposing catalyst A1>

A ceria-zirconia complex oxide support, as powder of a ceria-zirconia complex oxide support having a ceria/zirconia molar ratio of 5/5, as a basic support, was mixed with a ruthenium solution as a precursor solution for the ammonia-decomposing catalyst metal. The recovered solid content was then dried at 250°C and fired for 2 hours in 500°C air to obtain an ammonia-decomposing catalyst A1.

### <CO₂ adsorption of ammonia-decomposing catalyst A1>

The CO₂ adsorption of the ammonia-decomposing catalyst A1 was measured by CO₂ temperature-programmed desorption (CO₂-TPD), using a BELMETAL3 metal dispersion meter (MicrotracBEL)/BELMASS Online gas analyzer (MicrotracBEL). A 0.2 g portion of the ammonia-decomposing catalyst A1 was weighed out and introduced into the device. The ammonia-decomposing catalyst A1 was then heated to 500°C in a helium atmosphere for adsorbate desorption treatment. The ammonia-decomposing catalyst A1 was subsequently used to adsorb CO₂ at 120°C. Next, the ammonia-decomposing catalyst A1 was increased in temperature to 120 to 700°C at 30°C/min in a helium atmosphere, and the amount of CO₂ desorbed during temperature increase was detected. The CO₂ adsorption of the ammonia-decomposing catalyst A1 was 2.2 × 10⁻⁴ mol/sample-g.

### <Specific surface area of ammonia-decomposing catalyst A1>

The specific surface area of the ammonia-decomposing catalyst A1 was measured by the BET method with nitrogen as the adsorbate, using a Macsorb 1230 fully automatic specific surface area measuring apparatus (product of Mountech Co., Ltd.). First, 0.2 g of the ammonia-decomposing catalyst was weighed out and introduced into a sample tube, after which it was pretreated by dehydrating while deaerating the sample tube at 250°C, for removal of the water. The tube was then attached to the apparatus and cooled with liquid nitrogen, after which nitrogen gas was introduced and the specific surface area of the ammonia-decomposing catalyst A1 was found to be 96 m²/g, as determined from the amount of nitrogen gas adsorbed and the amount of surface adsorption on the ammonia-decomposing catalyst A1.

### <Fabrication of ammonia decomposing catalyst-supporting substrate B1>

The ammonia-decomposing catalyst A1 and an inorganic binder were weighed out and mixed to a proportion of ammonia-decomposing catalyst A1/inorganic binder = 8/2. Alumina was used as the inorganic binder. Purified water was added to an ammonia-decomposing catalyst A1 content of 35 mass%, and the mixture was stirred and pulverized with a ball mill for particle size adjustment. The viscosity was adjusted to a high shear viscosity of 100 mPas using a thickener (water-soluble polymer compound), to prepare a wash coat slurry containing the ammonia-decomposing catalyst A1. The wash coat slurry containing the ammonia-decomposing catalyst A1 was coated by the wash coat method onto a honeycomb support as the substrate to 190.5 g/L with respect to the volume of the honeycomb support, and then dried and fired for 1 hour in air at 500°C to obtain an ammonia decomposing catalyst-supporting substrate B1.

### <Fabrication of ammonia-decomposing catalyst A2>

A magnesia-alumina complex oxide support, as powder of a magnesia-alumina complex oxide support having a magnesia/alumina molar ratio of 6/4, as a basic support, was mixed with a ruthenium solution as a precursor solution for the ammonia-decomposing catalyst metal. The recovered solid content was then dried at 250°C and fired for 2 hours in 500°C air to an obtain ammonia-decomposing catalyst A2.

### <CO₂ adsorption and specific surface area of ammonia-decomposing catalyst A2>

The CO₂ adsorption and specific surface area of the ammonia-decomposing catalyst A2 were measured by the same methods as for the CO₂ adsorption and specific surface area of the ammonia-decomposing catalyst A1. The ammonia-decomposing catalyst A2 had a CO₂ adsorption of 6.1 × 10⁻⁴ mol/sample-g and a specific surface area of 96 m²/g.

### <Fabrication of ammonia decomposing catalyst-supporting substrate B2>

An ammonia decomposing catalyst-supporting substrate B2 was fabricated by the same method as the ammonia decomposing catalyst-supporting substrate B1, except for using the ammonia-decomposing catalyst A2 instead of the ammonia-decomposing catalyst A1.

### <Fabrication of ammonia-decomposing catalyst device C1>

The ammonia decomposing catalyst-supporting substrate B1 was disposed in the gas flow upstream region while the ammonia decomposing catalyst-supporting substrate B2 was disposed in the gas flow downstream region, to fabricate an ammonia-decomposing catalyst device C1.

### <Ammonia conversion rate of ammonia-decomposing catalyst device C1>

The ammonia conversion rate was determined by contacting ammonia with the ammonia-decomposing catalyst device using a fixed-bed flow reactor, and calculating the change in the amount of ammonia. The temperature was raised to 500°C under an ammonia flow, and then the temperature was lowered to 300°C and hydrogen gas was circulated as pretreatment (Table 1, pretreatment). Next, a mixture of nitrogen-diluted ammonia gas and hydrogen gas was supplied, and the change in the amount of ammonia upon addition of hydrogen (Test 1) was measured and the conversion rate was calculated. The change in the amount of ammonia was then measured and the conversion rate calculated when supplying only nitrogen-diluted ammonia gas (Test 2). In other words, in Test 1, the ammonia conversion rate was evaluated when supplying an ammonia gas/hydrogen gas mixture, while in Test 2, the ammonia conversion rate was evaluated when supplying ammonia gas. Table 1 shows the compositions and flow rates of the ammonia-containing gases used for measurement of the ammonia conversion rates. The ammonia-decomposing catalyst device C1 had an ammonia conversion rate of 9.1% in the copresence of hydrogen in Test 1 (with a mixture of ammonia gas and hydrogen gas supplied), and an ammonia conversion rate of 43.5% in Test 2 (with only ammonia gas supplied).

**[Table 1]**

| | Treatment conditions | Ammonia-containing gas composition | | | Flow volume [L/h] |
|---|---|---|---|---|---|
| | | Hydrogen [ppm] | Ammonia [ppm] | Nitrogen | |
| Pretreatment | Pretreatment with hydrogen | 3000 | 0 | Balance | 2820 |
| Test 1 | Ammonia conversion rate in copresence of hydrogen | 2500 | 1300 | Balance | 2820 |
| Test 2 | Ammonia conversion rate | 0 | 1300 | Balance | 2820 |

### <Example 2>

### <Fabrication of ammonia-decomposing catalyst A3>

Ceria support powder used as a basic support was mixed with a ruthenium solution as a precursor solution for the ammonia-decomposing catalyst metal. The recovered solid content was then dried at 250°C and fired for 2 hours in 500°C air to obtain an ammonia-decomposing catalyst A3.

### <CO₂ adsorption and specific surface area of ammonia-decomposing catalyst A3>

The CO₂ adsorption and specific surface area of the ammonia-decomposing catalyst A3 were measured by the same methods as for the CO₂ adsorption and specific surface area of the ammonia-decomposing catalyst A1. The ammonia-decomposing catalyst A3 had a CO₂ adsorption of 3.4 × 10⁻⁴ mol/sample-g and a specific surface area of 141 m²/g.

### <Fabrication of ammonia decomposing catalyst-supporting substrate B3>

An ammonia decomposing catalyst-supporting substrate B3 was fabricated by the same method as for the ammonia decomposing catalyst-supporting substrate B1, except for using the ammonia-decomposing catalyst A3 instead of the ammonia-decomposing catalyst A1.

### <Fabrication and ammonia conversion rate of ammonia-decomposing catalyst device C2>

The ammonia decomposing catalyst-supporting substrate B1 was disposed in the gas flow upstream region while the ammonia decomposing catalyst-supporting substrate B3 was disposed in the gas flow downstream region, to fabricate an ammonia-decomposing catalyst device C2. The ammonia conversion rate of the ammonia-decomposing catalyst device C2 was carried out by the same method as for the ammonia-decomposing catalyst device C1. Ammonia-decomposing catalyst device C2 had an ammonia conversion rate of 6.7% in the copresence of hydrogen in Test 1, and an ammonia conversion rate of 42.8% in Test 2.

### <Comparative Example 1>

### <Fabrication of ammonia-decomposing catalyst A4>

Alumina support powder used as a basic support was mixed with a ruthenium solution as a precursor solution for the ammonia-decomposing catalyst metal. The recovered solid content was then dried at 250°C and fired for 2 hours in 500°C air to obtain ammonia-decomposing catalyst A4.

### <CO₂ adsorption and specific surface area of ammonia-decomposing catalyst A4>

The CO₂ adsorption and specific surface area of ammonia-decomposing catalyst A4 were measured by the same methods as for the CO₂ adsorption and specific surface area of ammonia-decomposing catalyst A1. Ammonia-decomposing catalyst A4 had a CO₂ adsorption of 6.0 × 10⁻⁵ mol/sample-g and a specific surface area of 100 m²/g.

### <Fabrication of ammonia decomposing catalyst-supporting substrate B4>

Ammonia decomposing catalyst-supporting substrate B4 was fabricated by the same method as ammonia decomposing catalyst-supporting substrate B1, except for using ammonia-decomposing catalyst A4 instead of ammonia-decomposing catalyst A1.

### <Fabrication and ammonia conversion rate of ammonia-decomposing catalyst device c1>

Ammonia decomposing catalyst-supporting substrate B1 was disposed in the gas flow upstream region while ammonia decomposing catalyst-supporting substrate B4 was disposed in the gas flow downstream region, to fabricate ammonia-decomposing catalyst device c1. The ammonia conversion rate of ammonia-decomposing catalyst device c1 was carried out by the same method as for ammonia-decomposing catalyst device C1. Ammonia-decomposing catalyst device c1 had an ammonia conversion rate of 5.7% in the copresence of hydrogen in Test 1, and an ammonia conversion rate of 37.4% in Test 2.

### <Comparative Example 2>

### <Fabrication and ammonia conversion rate of ammonia-decomposing catalyst device c2>

Ammonia decomposing catalyst-supporting substrate B3 was disposed in the gas flow upstream region while ammonia decomposing catalyst-supporting substrate B1 was disposed in the gas flow downstream region, to fabricate ammonia-decomposing catalyst device c2. The ammonia conversion rate of ammonia-decomposing catalyst device c2 was carried out by the same method as for ammonia-decomposing catalyst device C1. The ammonia-decomposing catalyst device c2 had an ammonia conversion rate of 4.9% in the copresence of hydrogen in Test 1, and an ammonia conversion rate of 38.7% in Test 2.

### <Comparative Example 3>

### <Fabrication and ammonia conversion rate of ammonia-decomposing catalyst device c3>

The ammonia decomposing catalyst-supporting substrate B2 was disposed in the gas flow upstream region and in the gas flow downstream region, to fabricate an ammonia-decomposing catalyst device c3. The ammonia conversion rate of the ammonia-decomposing catalyst device c3 was carried out by the same method as for the ammonia-decomposing catalyst device C1. The ammonia-decomposing catalyst device c3 had an ammonia conversion rate of 12.0% in the copresence of hydrogen in Test 1, and an ammonia conversion rate of 35.5% in Test 2.

### <Comparative Example 4>

### <Fabrication and ammonia conversion rate of ammonia-decomposing catalyst device c4>

The ammonia decomposing catalyst-supporting substrate B3 was disposed in the gas flow upstream region and in the gas flow downstream region, to fabricate an ammonia-decomposing catalyst device c4. The ammonia conversion rate of the ammonia-decomposing catalyst device c4 was carried out by the same method as for the ammonia-decomposing catalyst device C1. The ammonia-decomposing catalyst device c4 had an ammonia conversion rate of 9.0% in the copresence of hydrogen in Test 1, and an ammonia conversion rate of 39.7% in Test 2.

### <Comparative Example 5>

### <Fabrication and ammonia conversion rate of ammonia-decomposing catalyst device c5>

The ammonia decomposing catalyst-supporting substrate B1 was disposed in the gas flow upstream region and in the gas flow downstream region, to fabricate an ammonia-decomposing catalyst device c5. The ammonia conversion rate of the ammonia-decomposing catalyst device c5 was carried out by the same method as for the ammonia-decomposing catalyst device C1. The ammonia-decomposing catalyst device c5 had an ammonia conversion rate of 6.5% in the copresence of hydrogen in Test 1, and an ammonia conversion rate of 38.5% in Test 2.

### <Comparative Example 6>

### <Fabrication and ammonia conversion rate of ammonia-decomposing catalyst device c6>

The ammonia decomposing catalyst-supporting substrate B4 was disposed in the gas flow upstream region and in the gas flow downstream region, to fabricate an ammonia-decomposing catalyst device c6. The ammonia conversion rate of the ammonia-decomposing catalyst device c6 was carried out by the same method as for the ammonia-decomposing catalyst device C1. The ammonia-decomposing catalyst device c6 had an ammonia conversion rate of 3.2% in the copresence of hydrogen in Test 1, and an ammonia conversion rate of 26.2% in Test 2.

The results for Examples 1 and 2 and Comparative Examples 1 to 6 are shown in Table 2.

**[Table 2]**

| | | Example 1 | Example 2 | Comp. Ex. 1 | Comp. Ex. 2 | Comp. Ex. 3 | Comp. Ex. 4 | Comp. Ex. 5 | Comp. Ex. 6 | |
|---|---|---|---|---|---|---|---|---|---|---|
| Ammonia-decomposing catalyst device | | Ammonia-decomposing catalyst device C1 | Ammonia-decomposing catalyst device C2 | Ammonia-decomposing catalyst device c1 | Ammonia-decomposing catalyst device c2 | Ammonia-decomposing catalyst device c3 | Ammonia-decomposing catalyst device c4 | Ammonia-decomposing catalyst device c5 | Ammonia-decomposing catalyst device c6 | |
| Gas flow upstream end region | Ammonia decomposing catalyst-supporting substrate | Ammonia decomposing catalyst-supporting substrate B1 | Ammonia decomposing catalyst-supporting substrate B1 | Ammonia decomposing catalyst-supporting substrate B1 | Ammonia decomposing catalyst-supporting substrate B3 | Ammonia decomposing catalyst-supporting substrate B2 | Ammonia decomposing catalyst-supporting substrate B3 | Ammonia decomposing catalyst-supporting substrate B1 | Ammonia decomposing catalyst-supporting substrate B4 | |
| | Ammonia-decomposing catalyst | Ammonia-decomposing catalyst A1 | Ammonia-decomposing catalyst A1 | Ammonia-decomposing catalyst A1 | Ammonia-decomposing catalyst A3 | Ammonia-decomposing catalyst A2 | Ammonia-decomposing catalyst A3 | Ammonia-decomposing catalyst A1 | Ammonia-decomposing catalyst A4 | |
| | Ammonia-decomposing catalyst metal | Ruthenium | Ruthenium | Ruthenium | Ruthenium | Ruthenium | Ruthenium | Ruthenium | Ruthenium | |
| | Basic support | Ceria-zirconia complex oxide support | Ceria-zirconia complex oxide support | Ceria-zirconia complex oxide support | Ceria support | Magnesia-alumina complex oxide support | Ceria support | Ceria-zirconia complex oxide support | Alumina support | |
| | CO₂ adsorption [mol/sample-g] | 2.2 × 10⁻⁴ | 2.2 × 10⁻⁴ | 2.2 × 10⁻⁴ | 3.4 × 10⁻⁴ | 6.1 × 10⁻⁴ | 3.4 × 10⁻⁴ | 2.2 × 10⁻⁴ | 6.0 × 10⁻⁵ | |
| | Specific surface area [m²/g] | 96 | 96 | 96 | 141 | 96 | 141 | 96 | 100 | |
| Gas flow down-stream end region | Ammonia decomposing catalyst-supporting substrate | Ammonia decomposing catalyst-supporting substrate B2 | Ammonia decomposing catalyst-supporting substrate B3 | Ammonia decomposing catalyst-supporting substrate B4 | Ammonia decomposing catalyst-supporting substrate B1 | Ammonia decomposing catalyst-supporting substrate B2 | Ammonia decomposing catalyst-supporting substrate B3 | Ammonia decomposing catalyst-supporting substrate B1 | Ammonia decomposing catalyst-supporting substrate B4 | |
| | Ammonia-decomposing catalyst | Ammonia-decomposing catalyst A2 | Ammonia-decomposing catalyst A3 | Ammonia-decomposing catalyst A4 | Ammonia-decomposing catalyst A1 | Ammonia-decomposing catalyst A2 | Ammonia-decomposing catalyst A3 | Ammonia-decomposing catalyst A1 | Ammonia-decomposing catalyst A4 | |
| | Ammonia-decomposing catalyst metal | Ruthenium | Ruthenium | Ruthenium | Ruthenium | Ruthenium | Ruthenium | Ruthenium | Ruthenium | |
| | Basic support | Magnesia-alumina complex oxide support | Ceria support | Alumina support | Ceria-zirconia complex oxide support | Magnesia-alumina complex oxide support | Ceria support | Ceria-zirconia complex oxide support | Alumina support | |
| | CO₂ adsorption [mol/sample-g] | | 6.1 × 10⁻⁴ | 3.4 × 10⁻⁴ | 6.0 × 10⁻⁵ | 2.2 × 10⁻⁴ | 6.1 × 10⁻⁴ | 3.4 × 10⁻⁴ | 2.2 × 10⁻⁴ | 6.0 × 10⁻⁵ |
| | Specific surface area [m²]^{l} | | 96 | 141 | 100 | 96 | 96 | 141 | 96 | 100 |
| Evaluation results | Ammonia conversion rate [%] | Test 1 NH₃ + H₂ | 9.1 | 6.7 | 5.7 | 4.9 | 12.0 | 9.0 | 6.5 | 3.2 |
| | | Test 2 NH₃ | 43.5 | 42.8 | 37.4 | 38.7 | 35.5 | 39.7 | 38.5 | 26.2 |

Examples 1 and 2 were ammonia-decomposing catalyst devices of the invention wherein the base density in the gas flow downstream region was higher than the base density in the gas flow upstream region, and when these ammonia-decomposing catalyst devices were used, the ammonia conversion rate was high in Test 2 (supplying ammonia gas). Comparative Examples 1 and 2, on the other hand, were ammonia-decomposing catalyst devices wherein the base density in the gas flow downstream region was lower than the base density in the gas flow upstream region, and when these ammonia-decomposing catalyst devices were used, the ammonia conversion rates in Test 2 were lower than the ammonia-decomposing catalyst devices of Examples 1 and 2.

In Comparative Examples 3 to 6, there were examined ammonia-decomposing catalyst devices using the same ammonia decomposing catalyst-supporting substrate in the gas flow upstream region and the gas flow downstream region, i.e. ammonia-decomposing catalyst devices having the same base density in the gas flow upstream region and the gas flow downstream region. The ammonia-decomposing catalyst devices of Comparative Examples 3 to 6 had lower ammonia conversion rates in Test 2 (supplying ammonia gas) compared to the ammonia-decomposing catalyst devices of Examples 1 and 2. When the ammonia-decomposing catalyst devices of Comparative Examples 3 to 6 were compared against each other, the ammonia conversion rates in the copresence of hydrogen in Test 1 (supplying a mixture of ammonia gas and hydrogen gas) tended to increase with higher base density.

The reasons for the increased ammonia conversion rate in Test 2 (supplying ammonia gas) with the ammonia-decomposing catalyst devices of the invention are conjectured to be as follows.

The first reason is thought to be that in the gas flow upstream region where the concentration of the ammonia reactant is relatively high, the relatively lower base density inhibits excessive acceleration of the ammonia decomposition reaction, whereas in the gas flow downstream region where the concentration of the ammonia reactant is relatively low, the relatively higher base density helps to facilitate progression of the ammonia decomposition reaction and allows the endothermic ammonia decomposition reaction to be carried out in a satisfactory manner throughout the entire ammonia-decomposing catalyst device.

Since the hydrogen concentration of the decomposition product increases as the ammonia decomposition reaction proceeds, the hydrogen concentration in the gas flow downstream region is higher than in the gas flow upstream region. The second reason is thought to be that the ammonia-decomposing catalyst device of the invention has an ammonia-decomposing catalyst with relatively high base density (an ammonia-decomposing catalyst that efficiently promotes ammonia decomposition reaction even in the copresence of hydrogen) disposed in the gas flow downstream region, thus allowing the ammonia decomposition reaction to proceed satisfactorily throughout the entire ammonia-decomposing catalyst device even as the hydrogen concentration increases.

Preferred embodiments of the ammonia-decomposing catalyst device, hydrogen method process and ammonia combustion method of the invention were described above, but a person skilled in the art will readily appreciate that modifications may be made such as are within the scope of the Claims.

### REFERENCE SIGNS LIST

100 Ammonia-decomposing catalyst device
100a Gas flow upstream region
100b Gas flow downstream region
110 First ammonia decomposing catalyst-supporting substrate
111 Second ammonia decomposing catalyst-supporting substrate

## Claims

1. An ammonia-decomposing catalyst device that decomposes ammonia to produce hydrogen, wherein
the ammonia-decomposing catalyst device has a gas flow upstream region and a gas flow downstream region, and
the base density in the gas flow downstream region is greater than the base density in the gas flow upstream region.

2. The ammonia-decomposing catalyst device according to claim 1, wherein:
the gas flow upstream region has a first basic support, the gas flow downstream region has a second basic support, and
ruthenium or nickel is supported on the first and/or second basic support.

3. The ammonia-decomposing catalyst device according to claim 1 or 2, wherein the basic support is a ceria support, a ceria-zirconia complex oxide support, a magnesia-alumina complex oxide support and/or a magnesium oxide support.

4. A hydrogen production method, wherein ammonia is contacted with an ammonia-decomposing catalyst device according to any one of claims 1 to 3, and the ammonia is decomposed to produce hydrogen.

5. An ammonia combustion method wherein ammonia is combusted together with hydrogen produced by the process according to claim 4.
